# EUROPEAN PATENT SPECIFICATION

(11) **EP 0 727 785 B1**
(45) Date of publication and mention of the grant of the patent: **11.06.1997**
(21) Application number: 95100835.8
(22) Date of filing: 23.01.1995
(51) Int. Cl.: G11C 29/00, G06F 1/00

(54) **Enhanced self-test of memories**
Verbesserte Speicherselbstprüfung
Auto-test amélioré de mémoire

(43) Date of publication of application: 21.08.1996
(73) Proprietor: International Business Machines Corporation, Armonk, N.Y. 10504 (US)
(72) Inventor: Torreiter, Otto, D-70771 Leinfelden-Echterdingen (DE); Metzger, Roland, D-71299 Wimsheim (DE); Wendel, Dieter, D-71101 Schönaich (DE)
(74) Representative: Schäfer, Wolfgang, Dipl.-Ing.

(56) References cited:
- EP-A- 0 215 464
- US-A- 4 727 544
- US-A- 4 816 656
- US-A- 4 930 129

## Description

### Field of the invention

The invention relates to memory self-test circuitries, particularly for portable microcomputers such as chip cards.

### Prior art

Memories are used in a variety of applications and require a certain amount of security features in order to prevent an unauthorized access to the memories or manipulations thereof.

Particularly portable microcomputers, for example comprised in an intelligent chip card, have recently become more and more important and require sophisticated security features to prevent an unauthorized access especially to the memories within the microcomputer, in order to avoid manipulations performed with the microcomputer. In the presently used chip cards with a microcomputer (e.g. multi function cards (MFC's) for cashless payment or telephone cards) certain functional units are to be kept inaccessible after the chip production and the wafer test for the purpose of security. One way to restrict access to the functional units is used by employing a personal identification number (PIN) which only allows an access to the microcomputer when the correct PIN has been entered.

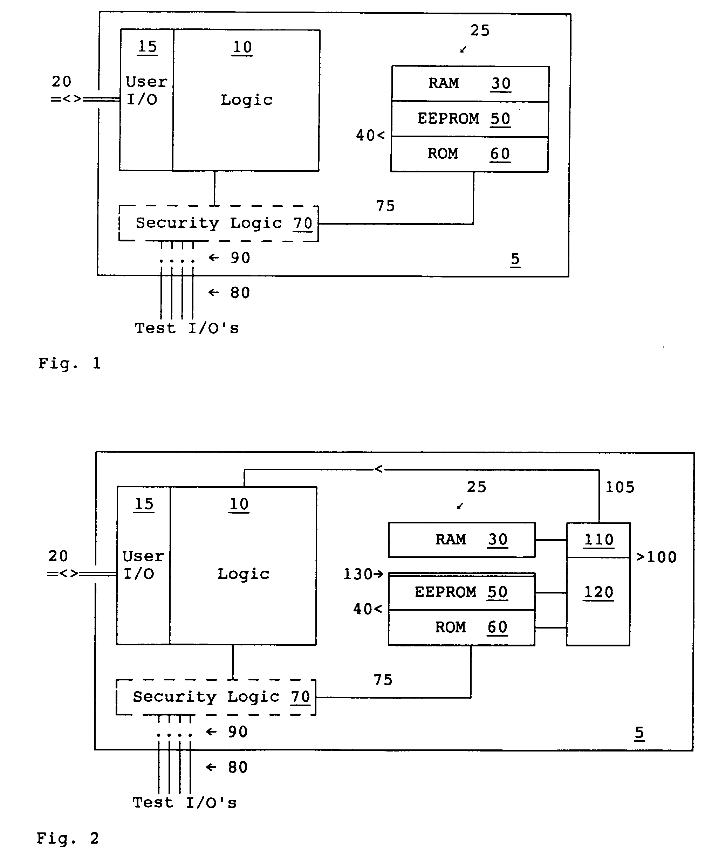

Fig. 1 shows a basic structure of a microcomputer 5 as known in the art. A logic block 10 which comprises a microprocessor is connectable via a user I/O port 15 and a user I/O terminal 20 to the outside world of the microcomputer 5. The microcomputer 5 further comprises a memory block 25 which usually contains a volatile memory 30 and non-volatile memories 40. The non-volatile memories 40 in general employ an erasable memory 50 (such as an electrical erasable and programmable memory EEPROM) and a non-erasable memory 60 (such as a read only memory ROM).

In certain applications, e.g. for security reasons, the memory block 25 is not directly accessible from the logic block 10 but only through a security logic 70 connecting the logic block 10 and the various memories 30 and 40 in the memory block 25. The security logic 70 controls, manages and addresses the memory block 25 independently from the logic block 10. When the logic block issues a read or write request onto the memory block 25, the security logic 70 interprets that request and addresses the respective memory cells. However, the logic block 10 only sends a word to be stored or receives a word read from the memory block 25 but does not know the location where the respective word is stored to or read from. However, it is to be understood that the security logic 70 provides an optional security feature for applications with a high security demand, but is not an essential feature for each microcomputer 5.

A data bus 75, interrupted by the security logic 70 when the optional security logic 70 is employed, couples between the logic block 10 and the memory block 25. Apart from the user I/O terminal 20, the microcomputer 5 for chip card applications usually comprises a test I/O terminal 80 connected to the security logic block 70. In order to keep certain functional units inaccessible after the production and the first testing of the microcomputer 5, the test I/O terminal 80 includes hardware fuses 90 which can be blown off, preferably straight after the wafer test, so that the microcomputer 5 afterwards is only accessible via the user I/O terminal 20. However, all units within the microcomputer 5 are fully accessible before blowing the fuses 90.

The test I/O terminal 80 allows a bypassing of the security logic 70 (before the fuses 90 are blown off) in order to directly address the memory block 25. However the bypassing of the security logic 70 is only acceptable for testing purposes before the actual usage of the microcomputer 5. When the microcomputer 5 is to be handed out to a customer, the fuses 90 have to be blown off irrevocably so that the memories 30 and 40 of the memory block 25 are only accessible through the security logic 70. The security logic 70, however, only allows access to the memory block 25 to a certain extend so that a sufficient testing after the completion of the microcomputer 5 cannot be achieved. The testing and a fault diagnose of returned chip cards is therefore either very difficult or even impossible to accomplish. That means that, for example, when a customer suspects a malfunction of his card this cannot be inspected by simply testing functional units such as the memory block 25. On the other hand, a manipulation of the card is also hardly detectable for the card dispensing institutes.

The functioning of the security logic 70 and the methods for preventing a manipulating access to protected units (e.g. by selectively locking the writing access on areas of an EEPROM) are generally kept as a secret. However, it is apparent that all presently used protecting mechanism basically isolate the protected units from the user interface provided by the user I/O port 15. A direct intrusion into areas of the memory block 25, e.g. by purposely charging or discharging the storage cells in the erasable memory (EEPROM) 50 by means of a charge carrier implantation with a electron-beam technique etc., can, however, not be avoided. Accordingly, an unwanted variation of the contents of the memory cells in the memory block 25 due to any kind of defects which, for example, are first exhibited after a certain intermission time between successive writing accesses ('Retention Time Defects'), or due to unwanted defects caused by electro-magnetic fields or radiation, can hardly be reconstructed.

Particularly the non-volatile memories 40 appear to be especially fault sensitive. Generally, the ROM 60 contains the invariable program codes and data in the form of constants. The EEPROM 50 contains variable and invariable data such as the state of an account, code numbers or the like, so that a special protection against manipulation is required herein. The ROM 60 is therefore fault sensitive only with respect to a manipulating intrusion, whereas the EEPROM 50 is fault sensitive with respect to defects occurring and also with respect to a manipulating intrusion into the memories. In Jain, S.K. and Stroud, C.E.: "Built-in Self Testing of Embedded Memories", IEEE, 3(1986)27, the authors present a built-in self-test method for testing embedded memories. Two algorithms are proposed for self-testing of embedded RAMs, both of which can detect a large variety of stuck-at and non-stuck-at faults. The hardware implementation of the methods requires a hardware test-pattern generator, which produces address, data, and read/write inputs. The output responses of the memory can be compressed by using a parallel input signature analyzer, or they can be compared with expected responses by an output comparator.

In US-4,727,544 a system for continuously checking the integrity of the memories of a computer controlled gaiming device has been disclosed. The gaiming device includes a plurality of EPROMs. A checksum algorithm stored in one of the EPROMs is periodically implemented. The checksum calculated for an EPROM is compared to a checksum value stored for that EPROM to determine whether changes in the contents of the memory have been made.

In US-4,816,656 it has been disclosed that read-out data signals are sequentially calculated when data are read out from a system program ROM on an IC card system. A central controller then determines whether the calculated data represents a predetermined value. If the result is "NO" controller determines that an error is present in data from ROM.

EP-A-0 505 603 discloses a basic concept for the testing of re-writable memory areas with write and read events with an emphasis on test time reduction. A test command with a test data word and an address is transmitted to the memory. The memory contains a tester which extracts a necessary test data bit for a protected memory from the test data word. The test of the memories can be executed in blocks or as a checkerboard test.

EP-A-0 574 990 discloses a test process for portable chip cards which is executed by means of a card terminal. The test process shall prevent an unauthorized multiplexing of an additional memory. A test word is determined as well as in the chip as in the terminal by means of a secret algorithm and with reference to the contents of the chip memories. The test words are then compared with each other. The test word is to be determined with every application so that faults or a manipulation on the card between successive applications of the card cannot be detected.

US-A-4,930,129 discloses an IC card having an error checking capability which operates within the card and without the need for the processing power of the terminal. The IC card has an onboard memory and an onboard microprocessor, whereby the onboard memory contains a plurality of application blocks to which access is selectively allowed by the microprocessor and a protected block which is accessible by the microprocessor but inaccessible by the terminal. Stored within the protected block are data specifying the location, size and application associated with each of the application blocks, as well as an error check code relating to the data when stored within the application block.

The microprocessor as disclosed in US-A-4,930,129 is involved in the testing of the memory areas and thus requires a certain knowledge of corresponding code in the memory areas. Furthermore, the testing is limited on so-called application blocks so that a ROM and the protected blocks are not testable. That means that especially the sensitive areas (ROM and protected blocks) where also the actual testing program is stored, cannot be tested, so that a fault or a manipulation therein cannot be detected. As a consequence, a defective code of the testing program will not be recognized so that the program might be executed defectively or even be bypassed. In other words even the correct testing of the application blocks is uncertain. Another problem of that testing is that the data contained in the application blocks must be available for the processor as transparent data, so that an unrestricted read access must be possible. The testing thus requires the knowledge of the contents of the memory. However, for certain applications wherein data has to be stored in protected blocks these data cannot be tested with the disclosed method.

### Summary of the invention

It is an object of the invention to provide a method and an apparatus which allows a testing of memories, particularly in microcomputers.

The objects of the invention are solved by the independent claims.

The self test circuitry according to the invention provides a general statement about the condition of a thereto coupled memory, whereby the general statement indicates a wanted or unwanted manipulation or alteration within the memory, and the contents of the memory or parts of it are not derivable from the generated statement. The general statement is preferably a "fail" or "pass" statement stating whether a deviation in the contents of the memory with respect to the last executed testing has been detected or not.

The self test circuitry in a preferred embodiment of the invention comprises a signature generating means which generates a signature from the contents of the memory, and a comparator for comparing the generated signature with a reference value of the signature and which issues at least one signal determining whether the generated signature and the reference value concur.

The self test circuitry according to the invention is preferably embodied in a computer system or a portable microcomputer such as a chip card, comprising the memory to be tested, a processor and, optionally, a security logic which restricts an access to the memory, so that the processor only receives information about the condition of the memory by means of the self test circuitry.

The testing according to the invention of a non-volatile memory is executed by generating a signature from the contents of the non-volatile memory and comparing the generated signature with a reference value of the signature.

In an embodiment of the invention, when the comparison of the generated signature with the reference value of the signature indicates a difference, a signal is issued and an access to the non-volatile memory is restricted and/or a failure treatment procedure can be started. The access to the non-volatile memory is allowed when the comparison of the generated signature with the reference value of the signature indicates no difference.

In order to allow a testing whether an alteration of the contents of the non-volatile memory has happened between successive authorised applications, a new signature from the contents of the non-volatile memory is generated after each application and stored as a new reference value of the signature.

The generation of a signature from the contents of the non-volatile memory can be effected by sequentially reading out the contents of the non-volatile memory, combining the first read-out sequence with a start sequence and combining each successive read-out sequence with the result of the preceding combination, whereby the last combination represents the signature of the non-volatile memory. Alternatively, the generation of a signature can be executed by adding digits representing the contents of the respective memory cells, thus forming the sum of digits (the check-sum) representing the signature of the non-volatile memory, or at least of a part of it.

The invention provides, e.g. in a microcomputer such as a chip card, an enhanced self test logic as an additional circuitry which can be kept inaccessible from outside of the microcomputer. After executing the self test of the memories in the microcomputer, the self test logic supplies a general statement about the condition of the memories, preferably a simple pass/fail result, however no information relating to the contents of the memories is given. The pass/fail statement can eventually be evaluated by the card terminal or can lead to a chip internal reaction such as a refusal of further access or issuing a fault signal. The microcomputer thus allows a recognition of wanted or unwanted changes or manipulations within the memories of the microcomputer and that respective actions will be executed independently.

The self-test circuitry of the present invention can therefore be used even in applications with a high demand on security and provides a reliable testing of the memories without destoying or the need of removing the contents of the memories. The self-test circuitry allows a complete separation of the memories from the processing units, such as the processor, in a way that the memories are not directly addressable or accessible for processing units. However, the processing units receive information from the self-test circuitry determining whether a variation within the contents of the memories has been detected so that a fault analysis and diagnosis of the memories can be started.

### Description of the drawings

The invention will now be described by way of example and with reference to the accompanying drawings wherein:
- Fig. 1: shows a basic structure of a microcomputer as known in the art,
- Fig. 2: shows an embodiment of a microcomputer according to the invention with an additional self test circuitry,
- Fig. 3: shows a general state diagram of an application of the microcomputer of Fig. 2 comprising a self-test of the memory blocks,
- Fig. 4: shows a preferred embodiment of the non-volatile memory tester,
- Fig. 5: shows an embodiment of the multiple input shift register (MISR).

### Detailed description of the invention

The invention will be explained with respect to an application of the memory self-tester in a microcomputer such as a chip card, however is not limited thereto.

Fig. 2 shows an embodiment of a microcomputer 5 according to the invention which is based on the fundamental structure of the microprocessor as given in Fig. 1, however, with an additional self test circuitry 100. The self test circuitry 100 is coupled between the memory blocks 25 and the logic circuit 10. The self test circuitry 100 is not directly controllable by the logic circuit 10, but only issues - when required - a general statement about the condition of the memory block 25 on a line 105 to the logic circuit 10. In other words, the self test circuitry 100 does not provide any data to the logic circuit 10 referring to the contents in the memory block 25, so that a conclusion about the contents of the memory block 25 cannot be drawn from that statement. Preferably, the self test circuitry 100 supplies a simple pass/fail statement to the logic circuit 10 only stating whether a deviation to the last executed testing has been detected or not.

In a preferred embodiment of the invention, the self test circuitry 100 comprises a volatile memory tester 110 coupled to the volatile memory 30 and a non-volatile memory tester 120 connected to the non-volatile memories 40. The volatile memory tester 110 tests the volatile memory 30 whereas the non-volatile memory tester 120 tests the non-volatile memories 40.

The contents of the volatile memory 30 are destroyed on the removal of power to the volatile memory 30, so that no data can be stored therein between successive operation cycles of the microcomputer 5 (in case the volatile memory 30 is not backed up with a temporary battery power supply). The testing of the volatile memory 30, executed by the volatile memory tester 110, can therefore be limited to a testing of a correct functioning of this device. The volatile memory tester 110 is preferably embodied as an array build in self test (ABIST) as known in the art. The volatile memory tester 110 can also be tested by a microprocessor within the logic circuit 10 using a memory test algorithm stored as micro-code within the non-volatile memories 40.

The contents of the non-volatile memories 40, in contrast to the volatile memory 30, are not lost when power to the memories is removed. That means that, apart from a testing of the correct functioning of the non-volatile memories 40, a further inspection of the actual contents is necessarily to be done by the non-volatile memory tester 120. However, the contents of the non-volatile memories 40 must not be changed during the testing so that the stored information will not be lost.

In certain applications, only variations within the contents of the memory cells are of interest, so that a testing of the correct functioning of the non-volatile memories 40 is not required in any case. As long as an alteration of a particular cell is not requested and the content thereof will not change, the actual functioning of the cell, that means if the cell is still able to alter its value or not, is not of importance and needs therefore not to be tested. However, when the actual functioning of the non-volatile memories 40 is of interest, the functioning test can be performed by any memory testing method as known in the art executed by the non-volatile memory tester 120. However, the contents of the respective memory to be tested have to be maintained (e.g. in the RAM 30).

For the inspection of the actual contents, the non-volatile memory tester 120 generates a signature of the entire contents of the non-volatile memories 40. A signature analysis in general means a method of determining a fault in a digital system by input of test sequences of binary digits and inspection of the resulting output sequences (signatures) of binary digits. The generation of a signature from a memory therefore means receiving a value - the signature - derived from the contents of that memory whereby the signature does not represent the contents, so that the contents of that memory, in return, cannot be derived again from that signature. For the purpose of an increased security, the signature is generated by using particular address sequences and coding methods.

An example for the generation of a signature of the contents of the memory blocks 25 is adding digits representing the contents of the respective memory cells, thus forming the sum of digits (the check-sum) of the non-volatile memories 40, or at least parts of it. The check-sum can be derived by adding the contents in the non-volatile memories 40 e.g. row by row, line by line, from each respective word-line, from respective odd and even addresses, or each other combination. It is to be understood that various possibilities for deriving a signature can be thought.

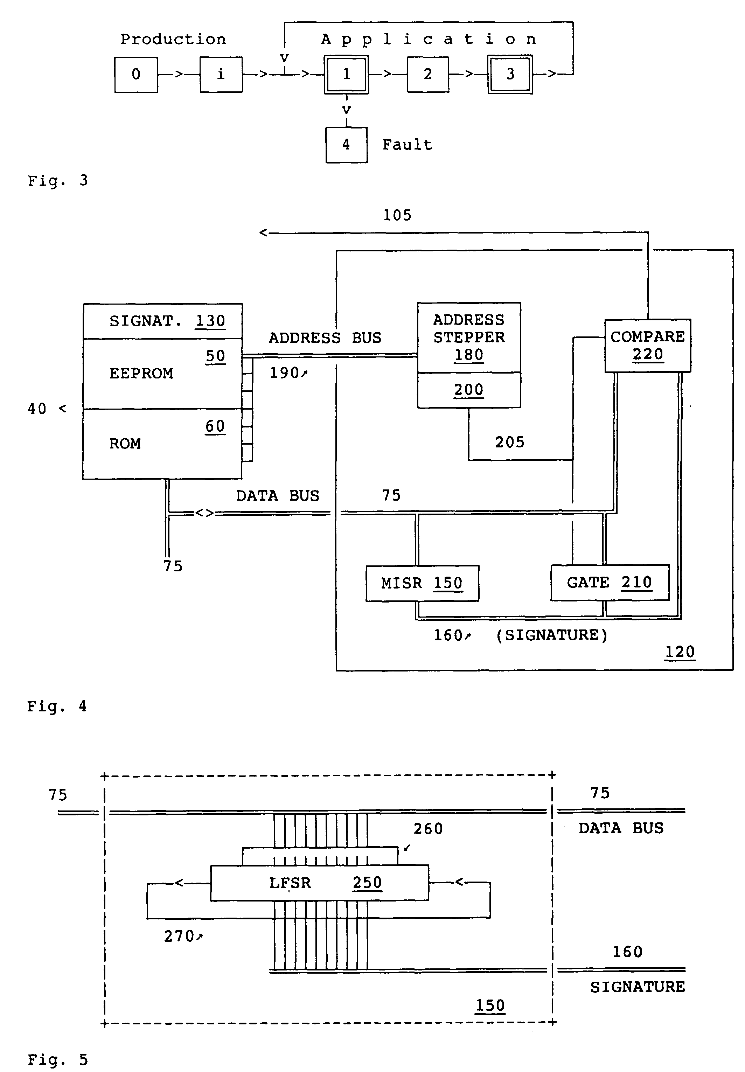

A more complex and thus more secure solution for the generation of a signature of the contents of the memory blocks 25 in the non-volatile memory tester 120 will be given in Fig. 4 and explained later.

As an increase of security, further features such as the individual PIN number of the microcomputer 5 can be included and implemented in the determination of the signature. As an example, the personal identification number (PIN) of the chip card, which is generally only known to the card holder, could serve as a start value and/or is added to the summation check of the memory contents.

The determined signature, which is independent of the contents of the memory cells, is eventually compared with a pre-determined reference value. The self test circuitry 100 then issues a general statement about the condition of the memory block 25, preferably a simple pass/fail statement, derived from that comparison. That means, when no deviation to the last executed testing of the non-volatile memories 40 has been detected, or in other words, when the signature and the reference value concur, the self test circuitry 100 issues a 'pass' statement and a requested service of the microcomputer 5 can start. When a deviation to the last executed testing of the non-volatile memories 40 is detected, or in other words, when the signature and the reference value do not concur, the self test circuitry 100 issues a 'fail' statement. In that case, it has to be specified which actions are to be done and if the requested service of the microcomputer 5 is allowed to start.

In general, the contents of the non-volatile memory 40 are not steady and are usually changed during an application. Also, if further features (e.g. the PIN number) are implemented in the determination of the signature, the signature might vary for that reason. The reference value therefore needs to be variable and is preferably stored in a part of the non-volatile memory 40 which is re-writable. Since a manipulation of the reference signature value, which can be encrypted several times, is very unlikely (e.g. for the purpose of an unauthorized access) and also senseless, the reference value can be preferably stored in a part 130 of the erasable memory 50. This part 130 can also be included in the determination of the signature.

The contents in the erasable memory 50 of the non-volatile memory 40 are usually changed with every new application of the microcomputer 5. This is due to a writing or reading of data during an application, for example when a new balance of an account as a result of a banking transaction has to be stored. That means that a new reference value for the signature is to be determined after each application.

Fig. 3 shows a general state diagram of an application of the microcomputer 5 comprising a self-test of the memory blocks 25. State 0 shows the microcomputer 5 immediately after the wafer test. The functioning of the entire parts including the memory blocks 25 and also of the self test circuitry 100 is ensured by a complete testing of the microcomputer 5. In state i, the actual initializing of the microcomputer 5 is executed comprising the programming of starting values for specific applications, the programming of a code number (e.g. the pin number) and the corresponding "first" reference value for the signature. The microcomputer 5 can then be handed out to the customer in a fully operating condition.

The states 1, 2 and 3 show the course of an application of the microcomputer 5, for example carried out by the customer at a card terminal. In state 1, a starting examination of the microcomputer 5 is executed and a signature from the contents of the non-volatile memories 40 is determined. When a concurrence of a newly generated signature with the stored reference value of the signature is found, the microcomputer 5 turns into state 2. State 2 represents the actual application of the microcomputer 5 by the customer whereby normally the contents of the non-volatile memory 40 are changed. When the actual application of state 2 is terminated, the microcomputer 5 goes into a state 3 in which the signature of the presently valid contents of the non-volatile memories 40 is determined and stored, e.g. in the part 130. The microcomputer 5 is then ready for a next application which can again start from state 1.

When in state 1 the comparison between the presently determined signature and the stored reference value of the signature indicates a difference between those values, the microcomputer 5 is turned from state 1 to a state 4, automatically. State 4 indicates that a fault has been recognized by the microcomputer 5 and that a fault treatment has to be started.

It has to be understood that the states 2 and 3 are only accessible when no fault has been detected in state 1. The state diagram of Fig. 3 shows that the microcomputer 5 is "internally locked" straight after the production and the initializing of the microcomputer 5 (state i). Each variation of the stored programs or data (e.g. due to defects or an unauthorized manipulation) is automatically determined by the microcomputer 5 itself. Further damages for the holder of the microcomputer 5 or a service provider, caused by a determined fault, can then be avoided by the transition of the microcomputer 5 from state 1 to state 4 representing a state wherein a fault treatment will be executed.

Beside to an increase of security in the handling of the microcomputer 5, the testability (even in a functional test) is perceptibly increased by the method and apparatus according to the invention. Even functioning units which are kept inaccessible from outside are completely testable without restricting the necessary requirements of security for the handling of (portable) microcomputers such as microcomputer 5.

It will be appreciated by those skilled in the art that when an error happens within the self testing circuitry 100, a faulty signature will be determined so that the microcomputer 5 will also be transferred automatically from state 1 into state 4.

Fig. 4 shows a complex and thus highly secure solution for the generation of a signature of the contents of the memory blocks 25 as a preferred embodiment of the non-volatile memory tester 120. The non-volatile memory tester 120 comprises a multiple input shift register (MISR) 150 connected via the data bus 75 to the non-volatile memories 40 and having an MISR output bus 160. The non-volatile memory tester 120 further comprises an address stepper 180 connected via an address bus 190 to the non-volatile memories 40, and a control unit 200 of the address stepper 180 which is connected via control lines 205 to a write gate 210 and a compare unit 220. Both, the write gate 210 and the compare unit 220 are also connected with the data bus 75 and with the MISR output bus 160.

The general function of the non-volatile memory tester 120 of Fig. 4 will now be explained with respect to the state diagram of Fig. 3. However, it is to be understood that modifications of that functioning depend on the chosen sequence of states. As explained above, before the microcomputer 5 starts any kind of application, a reference signature stored in part 130 of the non-volatile memories 40 has to be compared with a signature to be determined which represents the present condition of the non-volatile memories 40.

The determination of the present signature is executed in that the address stepper 180 sequentially addresses all locations within the non-volatile memories 40. The corresponding data are set, row by row and preferably in parallel, onto the data bus 75 and hence applied to the MISR 150. The MISR 150 generates a signature from the applied data on the address bus 75 by respectively combining each row, read from the non-volatile memories 40, with the result of the previous combinations of the previous rows. That means that the first row is combined to a starting value by using any possible logic function. The result thereof is then combined with the successive row using the same logic function and so on. The final result which represents the signature all over the contents of the non-volatile memories 40 is eventually placed on the MISR output line 160. The comparator 220 then compares the determined signature on the MISR output line 160 with the reference value of the signature applied on the data bus 75. Dependent whether the determined signature corresponds to the reference value, a pass or a fail signal is issued on line 105 to the logic block 10.

After an application in state 2 of Fig. 3 has been terminated, the microcomputer 5 enters state 3 wherein a new reference value of the signature will be generated and stored. This is executed by again determining a signature from the present contents of the non-volatile memories 40 as described above. When the signature has been generated from all over the present contents of the non-volatile memories 40, the control unit 200 of the address stepper 180 opens the write gate 210 to the data bus 75 and the newly generated signature can be written into the part 130 and stored therein.

In the embodiment of Fig. 4 it is almost impossible and very unlikely that a manipulation within the contents of the non-volatile memories 40 would result in the same signature, and furthermore, the signature is automatically encrypted. This provides a much higher security for example with respect to the simple determination of the check-sum test. In the check-sum test a manipulation of two bits in the same bit position within different memory locations would result in the same value of the signature.

It is to be understood that various embodiments of the MISR 150 can be thought. Fig. 5 shows an embodiment of the multiple input shift register (MISR) 150 comprising a linear feedback shift register (LFSR) 250 which is an n-bit clockable register. The LFSR 250 receives data in parallel from the data bus 75 and an output thereof, also in parallel, is placed on MISR output line 160. The LFSR 250 comprises a boolean network 260 combining the respective n bit lines of the data bus 75 and the contents of the respective bit cell within the LFSR 250 to a respective boolean function of them. Such a boolean function could be an AND, OR, EXCLUSIVE-OR or an INVERTER or any other more complex boolean function derived from that basic functions.

The LFSR 250 in another embodiment further comprises a feedback line 270 which allows to shift or rotate the contents of the LFSR 250 bit by bit. That means that the contents within the LFSR 250 can be shifted or rotated to other positions within the LFSR 250 before each bit is afterwards combined with the data on the data bus 75. As an example, the first row is combined with a starting value by any possible logic function, e.g. an XOR-function. The result thereof is then first rotated by one position and combined with the successive row using the same logic function, and so on.

As a further increase of security, as well the boolean function as the number of positions shifted or rotated within the LFSR 250 can be varied e. g. in an additional state 2' every time after the test in state 1 of Fig. 3 has successfully been carried out.

It is to be understood that the memory self-tester as disclosed herein is not limited to microcomputers only, but can be applied to any computer system wherein the testing of a non-volatile memory is required, particularly when the testing result should not refer to the contents of that memory.

It is also to be understood that a computer system as represented by the microcomputer 5 needs not necessarily be one separate unit, but can also be assembled by a plurality of separate units, e.g. one representing the processor in the logic circuit 10, one the memory block 40 and one the self-tester 100. Particularly with respect to non-intelligent chip card applications whereby the chip card does not comprise an own processor, the fundamental structure as given in Fig. 2 is not to be understood as only being limited to one separate unit.

## Claims

1. A computer system (5) comprising a memory (25) and a self test circuitry (100);
whereby a general statement about the condition of said memory (25) is generatable by said self test circuitry (100), said general statement being indicative of wanted or unwanted manipulation or alteration of the data stored in said memory (25); and
whereby the contents of said memory (25) or parts of it are not derivable from said generated statement;
characterized by a security logic (70) restricting an access to said memory (25), so that a processor (10) only receives information about the condition of said memory (25) by means of said self test circuitry (100).

2. The computer system (5) according to claim 1,
characterized in that the general statement is a "fail" or "pass" statement stating whether a deviation in the contents of the memory (25) with respect to the last executed testing has been detected or not.

3. The computer system (5) according to claim 1 or 2, characterized in that
the memory (25) comprises a non-volatile memory (40), whereby the non-volatile memory (40) preferably comprises an erasable memory (50), such as an electrical erasable and programmable memory EEPROM, and
the self test circuitry (100) comprises a non-volatile memory tester (120), whereby the non-volatile memory tester (120) comprises
a signature generating means (150) for generating a signature from the contents of the non-volatile memory (40), and
a comparator (220) for comparing the generated signature with a reference value of the signature, and for issuing at least one signal determining whether the generated signature and the reference value concur.

4. The computer system (5) according to claim 3,
characterized in that the non-volatile memory tester (120) further comprises
an address stepper (180, 200) for sequentially applying the contents of the non-volatile memory (40) to the signature generating means (150), and
a signature storing means (130, 210) for storing the presently generated signature as a next reference value.

5. The computer system (5) according to claim 3 or 4,
characterized in that the signature generating means (150) comprises
a register (250), preferably comprising register shifting means and/or register feedback means (270), and
a boolean network (260) for sequentially combining the contents of the non-volatile memory (40) with the respective contents of the register (250) to a respective boolean function of them.

6. A portable microcomputer, preferably a chip card,
characterized by comprising a computer system (5) according to claim 1.

7. A method in a computer system (5) with a memory (25) and a self test circutry (100), said method comprising the steps of
generating a general statement about the condition of said memory (25) by said self test circuitry (100), said general statement being indicative of wanted or unwanted manipulation or alteration of the data stored in said memory (25); characterized by the step of
restricting an access to said memory (25) by means of a securilty logic (70), so that a processor (10) is only receiving information about the condition of said memory (25) by means of said self test circuitry (100).

8. The method of claim 7 further comprising the steps of:
(a) generating a signature from the contents of the non-volatile memory (40); and
(b) comparing the generated signature with a reference value of the signature.

9. The method of claim 8, further comprising a step of:
(c) issuing a signal when the comparison of step (b) indicates a difference between the compared values.

10. The method of claim 8 or 9, further comprising a step of:
(d) restricting an access to the non-volatile memory (40) when the comparison of step (b) indicates a difference between the compared values.

11. The method of any one of the claims 8-10, further comprising a step of:
(e) allowing an access to the non-volatile memory (40) when the comparison of step (b) indicates no difference between the compared values.

12. The method of claim 11, further comprising the steps successive to the step (e) of:
(f) generating a new signature from the contents of the non-volatile memory (40); and
(g) storing the newly generated signature of step (e) as a new reference value of the signature.

13. The method according to any one of the above claims 9-12 further comprising successive to step (c) a step of
(h) starting a failure treatment procedure.

14. The method according to any one of the above claims 9 to 13, wherein the step (a) of generating a signature from the contents of the non-volatile memory (40) comprises the steps of
sequentially reading out the contents of the non-volatile memory (40);
combining the first read-out sequence with a start sequence;
combining each successive read-out sequence with the result of the preceding combination,
whereby the last combination represents the signature of the non-volatile memory (40).

15. The method according to any one of the above claims 7 to 14, wherein the step (a) of generating a signature from the contents of the non-volatile memory (40) comprises the steps of
adding digits representing the contents of the respective memory cells, thus forming the sum of digits, i.e. the checksum, representing the signature of the non-volatile memory (40), or at least of a part of it.

16. The method according to any one of the above claims 14 to 15, wherein the steps of combining sequences comprises a step of combining the sequences with a Boolean function.

17. The method according to any one of the above claims 14 to 16, wherein the steps of combining sequences comprises a step of shifting or rotating the sequences before or after the successive combination.

18. The method according to any one of the above claims 15 to 17, wherein the steps of adding the contents in the non-volatile memories (40) executed either row by row, line by line, from each respective word-line, from respective odd and even addresses, or a combination thereof.

19. Use of the method according to any one of the above claims 7-18 for portable microcomputers, preferably in chip cards.

## Patentansprüche

1. Computersystem (5) einen Speicher (25) und eine Selbstprüfungsschaltung (100) umfassend;
wobei durch die Selbstprüfungsschaltung (100) eine allgemeine Aussage über den Zustand des Speichers (25) erzeugt werden kann, wobei diese allgemeine Aussage eine erwünschte oder unerwünschte Manipulation oder Veränderung der in dem Speicher (25) gespeicherten Daten anzeigt; und
wobei der Inhalt des Speichers (25) oder von Teilen davon nicht aus der erzeugten Aussage abgeleitet werden kann;
gekennzeichnet durch eine Sicherheitslogik (70) die einen Zugriff auf den Speicher (25) einschränkt, so daß ein Prozessor (10) von der Selbstprüfungsschaltung (100) nur eine Informationen über den Zustand des Speichers (25) erhält.

2. Computersystem (5) gemäß Anspruch 1, dadurch gekennzeichnet, daß die allgemeine Aussage eine "Falsch"- oder "Richtig"-Aussage ist, die anzeigt, ob bezogen auf die zuletzt ausgeführte Prüfung eine Abweichung im Inhalt des Speichers (25) erkannt worden ist oder nicht.

3. Computersystem (5) gemäß einem der Ansprüche 1 oder 2, dadurch gekennzeichnet, daß
der Speicher (25) einen nicht flüchtigen Speicher (40) umfaßt, wobei der nicht flüchtige Speicher (40) vorzugsweise einen löschbaren Speicher (50) wie beispielsweise einen elektrisch löschbaren und programmierbaren Speicher EEPROM umfaßt, und
daß die Selbstprüfungsschaltung (100) eine Prüfeinrichtung (120) für nicht flüchtige Speicher umfaßt, wobei die Prüfeinrichtung (120) für nicht flüchtige Speicher umfaßt:
ein Signaturerzeugungsmittel (150) zur Erzeugung einer Signatur aus dem Inhalt des nicht flüchtigen Speichers (40), und
einen Komparator (220) zum Vergleichen der erzeugten Signatur mit einem Referenzwert der Signatur und zum Ausgeben mindestens eines Signals, das bestimmt, ob die erzeugte Signatur und der Referenzwert der Signatur übereinstimmen.

4. Computersystem (5) gemäß Anspruch 3, dadurch gekennzeichnet, daß die Prüfeinrichtung (120) für nicht flüchtige Speicher des weiteren umfaßt:
einen Adressen-Schrittschalter (180, 200) zum sequentiellen Anlegen der Inhalte des nicht flüchtigen Speichers (40) an das Signaturerzeugungsmittel (150), und
ein Signalspeichermittel (130, 210) zum Speichern der aktuell erzeugten Signatur als nächster Referenzwert.

5. Computersystem (5) gemäß einem der Ansprüche 3 oder 4, dadurch gekennzeichnet, daß das Signaturerzeugungsmittel (150) umfaßt:
ein Register (250), vorzugsweise Registerschiebemittel und/oder Registerrückkopplungsmittel (270) enthaltend, und
ein Boolesches Netzwerk (260) zum sequentiellen Verknüpfen der Inhalte des nicht flüchtigen Speichers (40) mit den entsprechenden Inhalten des Registers (250) zu einer entsprechenden Booleschen Funktion derselben.

6. Tragbarer Mikrocomputer, vorzugsweise eine Chipkarte, dadurch gekennzeichnet, daß er ein Computersystem (5) gemäß Anspruch 1 umfaßt.

7. Datenverarbeitungsverfahren innerhalb eines Computersystems (5) mit einem Speicher (25) und einer Selbstprüfungsschaltung (100), wobei das Verfahren die folgenden Schritte umfaßt:
Erzeugen einer allgemeinen Aussage über den Zustand des Speichers (25) durch die Selbstprüfungsschaltung (100), wobei diese allgemeine Aussage eine erwünschte oder unerwünschte Manipulation oder Veränderung der in dem Speicher (25) gespeicherten Daten anzeigt; gekennzeichnet durch den Schritt des
Einschränkens des Zugriffs auf den Speicher (25) mittels einer Sicherheitslogik (70), so daß der Prozessor (10) von der Selbstprüfungsschaltung (100) nur eine Informationen über den Zustand des Speichers (25) erhält.

8. Verfahren gemäß Anspruch 7, des weiteren die folgenden Schritte umfassend:
(a) Erzeugen einer Signatur aus dem Inhalt des nicht flüchtigen Speichers (40); und
(b) Vergleichen der erzeugten Signatur mit einem Referenzwert der Signatur.

9. Verfahren gemäß Anspruch 8, des weiteren den folgenden Schritt umfassend:
c) Ausgeben eines Signals, wenn der Vergleichsschritt (b) eine Differenz zwischen den verglichenen Werten anzeigt.

10. Verfahren gemäß einem der Ansprüche 8 oder 9, des weiteren den folgenden Schritt umfassend:
(d) Einschränken des Zugriffs auf den nicht flüchtigen Speicher (40), wenn der Vergleichsschritt (b) eine Differenz zwischen den verglichenen Werten anzeigt.

11. Verfahren gemäß einem der Ansprüche 8 bis 10, des weiteren den folgenden Schritt umfassend:
(e) Gestatten des Zugriffs auf den nicht flüchtigen Speicher (40), wenn der Vergleichsschritt (b) keine Differenz zwischen den verglichenen Werten anzeigt.

12. Verfahren gemäß Anspruch 11, des weiteren im Anschluß an Schritt (e) die folgenden Schritte umfassend:
(f) Erzeugen einer neuen Signatur aus dem Inhalt des nicht flüchtigen Speichers (40); und
(g) Speichern der neu erzeugten Signatur von Schritt (f) als neuen Referenzwert der Signatur.

13. Verfahren gemäß einem der vorstehenden Ansprüche 9 bis 12, des weiteren im Anschluß an Schritt ⓒ den folgenden Schritt umfassend:
(h) Starten eines Fehlerbehandlungsprogramms.

14. Verfahren gemäß einem der vorstehenden Ansprüche 9 bis 13, wobei der Schritt (a) der Erzeugung einer Signatur aus dem Inhalt des nicht flüchtigen Speichers (40) die folgenden Schritte umfaßt:
sequentielles Auslesen des Inhaltes des nicht flüchtigen Speichers (40);
Kombinieren der zuerst gelesenen Folge mit einer Startfolge;
Kombinieren jeder nachfolgend gelesenen Folge mit dem Ergebnis der vorhergehenden Kombination,
wobei die letzte Kombination die Signatur des nicht flüchtigen Speichers (40) darstellt.

15. Verfahren gemäß einem der vorstehenden Ansprüche 7 bis 14, wobei der Schritt (a) der Erzeugung einer Signatur aus dem Inhalt des nicht flüchtigen Speichers (40) die folgenden Schritte umfaßt:
Addieren von Ziffern, die den Inhalt der entsprechenden Speicherzellen widerspiegeln, und somit Bilden der Summe der Ziffern, d.h. der Prüfsumme, die die Signatur des nicht flüchtigen Speichers (40) oder zumindestens eines Teils davon darstellt.

16. Verfahren gemäß einem der vorstehenden Ansprüche 14 bis 15, wobei die Schritte des Kombinierens der Folgen einen Schritt des Kombinierens der Folgen mit einer Booleschen Funktion umfassen.

17. Verfahren gemäß einem der vorstehenden Ansprüche 14 bis 16, wobei die Schritte des Kombinierens der Folgen einen Schritt des Verschiebens oder Rotierens der Folgen vor oder nach der aufeinanderfolgenden Kombination umfassen.

18. Verfahren gemäß einem der vorstehenden Ansprüche 15 bis 17, wobei die Schritte des Addierens der Inhalte des nicht flüchtigen Speichers (40) entweder zeilenweise, leitungsweise, von jeder entsprechenden Wortleitung, von entsprechenden geradzahligen oder ungeradzahligen Adressen oder von einer Kombination davon ausgeführt werden.

19. Anwendung des Verfahrens gemäß einem der vorstehenden Ansprüche 7 bis 18 in tragbaren Mikrocomputern, vorzugsweise in Chipkarten.

## Revendications

1. Système informatique (5) comprenant une mémoire (25) et des circuits d'auto-test (100);
par lequel une instruction générale sur la condition de ladite mémoire (25) peut être engendrée par lesdits circuits d'auto-test (100), ladite instruction générale indiquant une manipulation ou une modification voulue ou non voulue des données emmagasinées dans ladite mémoire (25); et
par lequel le contenu de ladite mémoire (25) ou des portions de celui-ci ne peuvent pas être dérivées de ladite instruction engendrée;
caractérisé par une logique de sécurité (70) réduisant un accès à ladite mémoire (25) pour qu'un processeur (10) reçoive uniquement des informations relatives à la condition de ladite mémoire (25) au moyen desdits circuits d'auto-test (100).

2. Système informatique (5) selon la revendication 1, caractérisé en ce que l'instruction générale est une instruction d"'échec" ou de "passage" indiquant si une déviation du contenu de la mémoire (25) par rapport au test dernièrement exécuté, a été détectée ou non.

3. Système informatique (5) selon les revendications 1 ou 2, caractérisé en ce que:
la mémoire (25) comprend une mémoire non volatile (40), ce qui fait que la mémoire non volatile (40) comprend de préférence une mémoire effaçable (50), par exemple, une mémoire effaçable et programmable électrique EEPROM, et
les circuits d'auto-test (100) comprennent un testeur de mémoire non volatile (120), ce qui fait que le testeur de mémoire non volatile (120) comprend
des moyens de génération de signature (150) pour engendrer une signature à partir du contenu de la mémoire non volatile (40), et
un comparateur (220) pour comparer la signature engendrée à une valeur de référence de la signature, et pour émettre au moins un signal déterminant si la signature engendrée et la valeur de référence coïncident.

4. Système informatique (5) selon la revendication 3, caractérisé en ce que le testeur de mémoire non volatile (120) comprend en outre:
un dispositif d'avance d'adresse (120, 200) pour appliquer en séquentiel le contenu de la mémoire non volatile (40) sur les moyens de génération de signature (150), et
des moyens d'emmagasinage de signature (130, 210) pour emmagasiner la signature actuellement engendrée comme prochaine valeur de référence.

5. Système informatique (5) selon les revendications 3 ou 4, caractérisé en ce que les moyens de génération de signature (150) comprennent:
un registre (250) comprenant de préférence des moyens de registre à décalage et/ou des moyens de registre à réaction (270), et
un réseau booléen (260) pour combiner en séquentiel le contenu de la mémoire non volatile (40) avec le contenu respectif du registre (250) en une fonction booléenne de ceux-ci.

6. micro-ordinateur portable, de préférence une carte à puce, caractérisé en ce qu'il comprend un système informatique (5) conforme à la revendication 1.

7. Procédé, dans un système informatique (5) ayant une mémoire (25) et des circuits d'auto-test (100), ledit procédé comprenant les étapes de:
engendrer une instruction générale sur la condition de ladite mémoire (25) par lesdits circuits d'auto-test (100), ladite instruction générale indiquant une manipulation ou une modification voulue ou non voulue des données emmagasinées dans ladite mémoire (25); caractérisé par l'étape de
réduire un accès à ladite mémoire (25) au moyen d'une logique de sécurité (70) pour qu'un processeur (10) reçoive uniquement des informations sur la condition de ladite mémoire (25) au moyen desdits circuits d'auto-test (100).

8. Procédé selon la revendication 7, comprenant en outre les étapes de:
(a) engendrer une signature à partir du contenu de la mémoire non volatile (40); et
(b) comparer la signature engendrée à une valeur de référence de la signature.

9. Procédé selon la revendication 8, comprenant en outre une étape de:
(c) émettre un signal lorsque la comparaison de l'étape (b) indique une différence entre les valeurs comparées.

10. Procédé selon les revendications 8 ou 9, comprenant en outre une étape de:
(d) réduire un accès à la mémoire non volatile (40) lorsque la comparaison de l'étape (b) indique une différence entre les valeurs comparées.

11. Procédé selon l'une quelconque des revendications 8-10, comprenant en outre une étape de:
(e) permettre un accès à la mémoire non volatile (40) lorsque la comparaison de l'étape (b) n'indique pas de différence entre les valeurs comparées.

12. Procédé selon la revendication 11, comprenant en outre les étapes successives jusqu'à l'étape (e) de:
(f) engendrer une nouvelle signature à partir du contenu de la mémoire non volatile (40); et
(g) emmagasiner la signature nouvellement engendrée de l'étape (e) en tant que nouvelle valeur de référence de la signature.

13. Procédé selon l'une quelconque des revendications 9-12, comprenant en outre après l'étape (c) une étape de
(h) démarrer une procédure de traitement d'échec.

14. Procédé selon l'une quelconque des revendications 9 à 13, dans lequel l'étape (a) de génération d'une signature à partir du contenu de la mémoire non volatile (40) comprend les étapes de:
lire en séquentiel le contenu de la mémoire non volatile (40);
combiner la première séquence lue à une séquence de démarrage;
combiner chaque séquence successive lue au résultat de la combinaison précédente;
ce qui fait que la dernière combinaison représente la signature de la mémoire non volatile (40).

15. Procédé selon l'une quelconque des revendications 7 à 14, dans lequel l'étape (a) de génération d'une signature à partir du contenu de la mémoire non volatile (40) comprend les étapes de:
ajouter des chiffres représentant le contenu des cellules de mémoire respectives, formant ainsi la somme de chiffres, c'est-à-dire, la somme de vérification, représentant la signature de la mémoire non volatile (40), ou au moins une partie de celle-ci.

16. Procédé selon l'une quelconque des revendications 14 à 15, dans lequel les étapes de combinaison de séquences comprennent une étape de combinaison des séquences avec une fonction booléenne.

17. Procédé selon l'une quelconque des revendications 14 à 16, dans lequel les étapes de combinaison de séquences comprennent une étape de décalage ou de rotation des séquences avant ou après la combinaison successive.

18. Procédé selon l'une quelconque des revendications 15 à 17, dans lequel les étapes d'ajouter le contenu dans les mémoires non volatiles (40) sont exécutées rangée par rangée, ligne par ligne, à partir de chaque ligne de mot respective, à partir d'adresses impaires et paires respectives, ou une combinaison de celles-ci.

19. Utilisation du procédé selon l'une quelconque des revendications 7-18 pour micro-ordinateurs portables, de préférence, dans des cartes à puce.
